# EUROPÄISCHE PATENTANMELDUNG

(11) **EP 4 749 770 A1**
(43) Veröffentlichungstag der Anmeldung: **27.05.2026**
(21) Anmeldenummer: 25217082.4
(22) Anmeldetag: 19.11.2025
(51) Int. Cl.: H01M 10/613, H01M 10/6235, H01M 10/643, H01M 10/6551, H01M 10/6553, H01M 10/6554, H01M 10/6555, H01M 50/213, H01M 50/247, H01M 50/503, H01M 50/516, H01M 50/529

(54) **AKKUPACK FÜR EIN ELEKTROGERÄT**

(30) Priorität: 21.11.2024 DE 102024134272
(71) Anmelder: Einhell Germany AG, 94405 Landau / Isar (DE)
(72) Erfinder: Thannhuber, Markus, 94405 Landau/Isar (DE)
(74) Vertreter: Hofstetter, Schurack & Partner

(57) **Zusammenfassung**

Ein Akkupack (1) für ein Elektrogerät enthält Akkuzellen (4a, 4b) enthält, die jeweils eine Zellhülle aufweisen, sowie ein Verbindungsblech (6), welches einen ersten Elektrodenbereich (5a, 5b) an der Zellhülle einer ersten Akkuzelle (4a, 4b) mit einem zweiten Elektrodenbereich (5a, 5b) an der Zellhülle einer zweiten Akkuzelle (4a, 4b) elektrisch miteinander verbindet. Das Verbindungsblech (6) ist mit der Zellhülle der ersten Akkuzelle (4a, 4b) an wenigstens zwei Schweißbereichen (8a, 8b, 9a, 9b, 14a-14d, 18a, 18b, 19a, 19b, 21a, 21b, 22a, 22b, 24a-24d, 29a-29d) verschweißt und weist eine Schlitzanordnung (31) auf, wobei für jedes Paar von Schweißbereichen (8a, 8b, 9a, 9b, 14a-14d, 18a, 18b, 19a, 19b, 21a, 21b, 22a, 22b, 24a-24d, 29a-29d) die Schweißbereiche (8a, 8b, 9a, 9b, 14a-14d, 18a, 18b, 19a, 19b, 21a, 21b, 22a, 22b, 24a-24d, 29a-29d) auf gegenüberliegenden Seiten eines Schlitzes (7a, 7b, 15a-15d, 16a, 16b, 17a, 17b, 23, 23a-23d, 28a-28f) der Schlitzanordnung (31) liegen.

## Beschreibung

Die vorliegende Erfindung betrifft ein Akkupack für ein Elektrogerät aufweisend wenigstens zwei Akkuzellen, die jeweils eine Zellhülle aufweisen, sowie ein Verbindungsblech, welches einen ersten Elektrodenbereich an der Zellhülle einer ersten Akkuzelle der wenigstens zwei Akkuzellen mit einem zweiten Elektrodenbereich an der Zellhülle einer zweiten Akkuzelle der wenigstens zwei Akkuzellen elektrisch miteinander verbindet, wobei das Verbindungsblech mit der Zellhülle der ersten Akkuzelle verschweißt ist. Die Erfindung betrifft ferner ein System aufweisend ein solches Akkupack sowie ein Verfahren zur elektrischen Verbindung von Akkuzellen eines Akkupacks für ein Elektrogerät.

Mit akkubetreibbare Elektrogeräte, beispielsweise Elektrowerkzeuge, sind häufig dazu ausgelegt, mit als System-Akkupacks oder Wechsel-Akkupacks bezeichneten Akkupacks mit elektrischer Energie versorgt zu werden. Bei solchen Wechsel-Akkupacks kann ein Außengehäuse des Akkupacks mechanisch und elektrisch an dem Gehäuse des Elektrogeräts befestigt werden und bei Bedarf, zum Beispiel zum Laden oder zur Lagerung oder zur Verwendung mit einem anderen Elektrogerät, leicht entfernt werden, beispielsweise durch Lösen einer entsprechenden Rastverbindung oder dergleichen.

Die Elektroden der Akkuzellen eines solchen Akkupacks sind insbesondere miteinander elektrisch verschaltet, beispielsweise in Reihe zueinander oder parallel zueinander oder entsprechend einer komplexeren Verschaltungstopologie. Die Verschaltung kann dabei durch entsprechende Verbindungsbleche, beispielsweise sogenannte Linkerbleche, realisiert werden.

Eine Herausforderung, die sich bei der Verschweißung eines solchen Verbindungsblechs stellen kann ist es, den Hitzeeintrag in die Akkuzelle beim Schweißvorgang zu begrenzen, um eine Beschädigung der innerhalb der Zellhülle liegenden Komponenten zu vermeiden.

Es ist eine Aufgabe der vorliegenden Erfindung, in einem Akkupack für ein Elektrogerät den Hitzeeintrag in die Akkuzelle beim Schweißvorgang zu reduzieren.

Diese Aufgabe wird durch den Gegenstand des unabhängigen Anspruchs gelöst. Vorteilhafte Weiterbildungen und bevorzugte Ausführungsformen sind Gegenstand der abhängigen Ansprüche.

Die Erfindung beruht auf dem Gedanken, dem Verbindungsblech eine Schlitzanordnung vorzusehen und Schweißbereiche zur Verbindung des Verbindungsblechs an den Zellhüllen derart anzuordnen, dass sie paarweise auf gegenüberliegenden Seiten zumindest eines Schlitzes der Schlitzanordnung liegen.

Gemäß einem Aspekt der Erfindung wird ein Akkupack für ein Elektrogerät, insbesondere ein Elektrowerkzeug, angegeben. Das Akkupack enthält wenigstens zwei Akkuzellen, die jeweils eine Zellhülle aufweisen. Das Akkupack weist ein Verbindungsblech auf, welches einen ersten Elektrodenbereich an der Zellhülle einer ersten Akkuzelle der wenigstens zwei Akkuzellen mit einem zweiten Elektrodenbereich an der Zellhülle einer zweiten Akkuzelle der wenigstens zwei Akkuzellen elektrisch miteinander verbindet. Das Verbindungsblech ist mit der Zellhülle der ersten Akkuzelle an wenigstens zwei Schweißbereichen verschweißt. Das Verbindungsblech weist eine Schlitzanordnung auf, wobei für jedes Paar von Schweißbereichen der wenigstens zwei Schweißbereiche die beiden Schweißbereiche des jeweiligen Paars auf gegenüberliegenden Seiten zumindest eines Schlitzes der Schlitzanordnung liegen.

Das Akkupack kann insbesondere als Wechsel-Akkupack, auch als System-Akkupack bezeichnet, ausgestaltet sein.

Das Akkupack, insbesondere das Außengehäuse des Akkupacks, kann lösbar, insbesondere zerstörungsfrei lösbar, mit einem Gehäuse des Elektrogeräts verbunden werden, beispielsweise über eine Rastverbindung, eine Steckverbindung und/oder eine Klemmverbindung. Insbesondere kann die mechanische Verbindung des Außengehäuses des Akkupacks mit dem Gehäuse des Elektrogeräts als formschlüssige und/oder kraftschlüssige Verbindung ausgestaltet sein, ohne dass eine stoffschlüssige Verbindung vorliegt. Mit anderen Worten kann die mechanische Verbindung des Außengehäuses des Akkupacks mit dem Gehäuse des Elektrogeräts gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden.

Zur elektrischen und mechanischen Verbindung können die Gehäuse des Akkupacks und des Elektrogeräts jeweils entsprechende Schnittstellen aufweisen. Insbesondere kann das Außengehäuse des Akkupacks ohne Verwendung eines Kabels zwischen dem Akkupack und Gehäuse des Elektrogeräts mechanisch und elektrisch mit dem Gehäuse des Elektrogeräts verbunden werden. Beispielsweise ist das Außengehäuse des Akkupacks bezüglich des Gehäuses des Elektrogeräts unbeweglich, wenn das Außengehäuse des Akkupacks an dem Gehäuse des Elektrogeräts befestigt ist und so lange die Verbindung nicht durch einen entsprechenden Mechanismus gelöst wird.

Eine elektrische Verbindung der wenigstens zwei Akkuzellen mit dem Elektrogerät, insbesondere einem Motor oder sonstigen elektrischen Verbraucher des Elektrogeräts, kann beispielsweise über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrogerät zu erzielen.

Das Akkupack kann in manchen Ausführungsformen beispielsweise eine Ausgangsspannung im Bereich 12V bis 60V bereitstellen. Das Akkupack kann in manchen Ausführungsformen beispielsweise eine Kapazität von 2 Ah bis 15 Ah aufweisen.

Jede Akkuzelle der wenigstens zwei Akkuzellen weist eine Anode und eine Kathode auf, die beispielsweise jeweiligen Bereichen der Zellhülle entsprechen, die elektrisch voneinander isoliert sind.

Die Zellhülle kann in manchen Ausführungsformen massiv ausgestaltet sein, beispielsweise aus Metall oder teilweise aus Metall, insbesondere wenn es sich bei den wenigstens zwei Akkuzellen um zylindrische Akkuzellen handelt.

Bei zylindrischen Akkuzellen befinden sich die Elektrodenflächen beispielsweise in der Regel auf der Grund- beziehungsweise Deckfläche des entsprechenden Zylinders. Der erste Elektrodenbereich der ersten Akkuzelle entspricht dabei also der Anode oder Kathode der ersten Akkuzelle und der zweite Elektrodenbereich der zweiten Akkuzelle entspricht einer Anode oder Kathode der zweiten Akkuzelle. Welche Kombination im Einzelnen vorliegt, hängt insbesondere von der konkreten Verschaltungstopologie ab. Die erfindungsgemäße Anordnung des Verbindungsblechs und der Schweißbereiche lässt sich unabhängig davon realisieren.

Das Verbindungselement stellt eine elektrische Verbindung zwischen der ersten Elektrodenfläche und der zweiten Elektrodenfläche her. Es kann sich dabei beispielsweise um ein Metallblech, insbesondere ein sogenanntes Linkerblech, handeln.

Ein Schweißbereich kann hier und im Folgenden einem Schweißpunkt, also einem im Wesentlichen Null-dimensionalen Schweißbereich, einem linienförmigen beziehungsweise im Wesentlichen eindimensionalen Schweißbereich, oder einem zweidimensionalen Schweißbereich entsprechen.

Die Schlitzanordnung beinhaltet einen oder mehrere Schlitze, welche durchgängig durch das Verbindungsblech ausgestalteten sind. Die Schlitze können beispielsweise einem Bereich aus Luft oder einem festen wärmeisolierenden Material entsprechen.

Das zwei Schweißbereiche auf gegenüberliegenden Seiten zumindest eines Schlitzes, also eines Schlitzes oder mehrerer Schlitze liegen, kann insbesondere derart verstanden werden, dass jede gerade Linie zwischen den beiden Schweißbereichen den Schlitz oder einen der Schlitze durchquert. Dementsprechend wird eine Wärmepropagation von einem der Schweißbereiche zum anderen der Schweißbereiche durch die Schlitzanordnung blockiert beziehungsweise unterbrochen. Folglich wird erreicht, dass sich der Hitzeeintrag an verschiedenen Schweißbereichen beim Verschweißen des Verbindungsblechs mit der entsprechenden Zellhülle nicht oder weniger stark akkumuliert, so dass der lokale Hitzeeintrag reduziert wird, da Hitze von einem der Schweißbereiche weniger leicht zu einem anderen Schweißbereich gelangt. und dementsprechend Beschädigungen durch eine Überhitzung im Inneren der Zellhülle vermieden werden. In dem Bereich an dem das Verbindungsblech mit der Zellhülle verbunden ist kann im Betrieb des Akkupacks eine signifikante Stromdichte vorliegen. Da zumindest zwei Schweißbereiche vorgesehen sind, Wird die Stromdichte lokal reduziert, was ebenfalls zu einem reduzierten Risiko für Beschädigungen durch lokale Überhitzung führt.

Ausführungen und Erläuterungen, die sich hier und im Folgenden auf die Verschweißung des Verbindungsblechs mit der Zellhülle der ersten Akkuzelle beziehen, können insbesondere analog auf die Verschweißung des Verbindungsblechs mit der Zellhülle der zweiten Akkuzelle übertragen werden.

Gemäß zumindest einer Ausführungsform weist die Schlitzanordnung eine Vielzahl von Schlitzen auf, die sich ausgehend von einem Zentrum der Schlitzanordnung jeweils radial nach außen erstrecken.

In solchen Ausführungsformen bilden die Schlitze umlaufend um das Zentrum der Schlitzanordnung mehrere Segmente, in denen jeweils maximal ein Schweißbereich angeordnet sein kann. Dadurch lässt sich eine gleichmäßige und vergleichsweise großflächige Verteilung der Schweißbereiche erreichen.

Es ist insbesondere möglich, dass die Schlitze geradlinig oder im Wesentlichen geradlinig ausgestaltet sind. Die Schlitze können also strahlenförmig ausgebildet sein. Es ist insbesondere auch möglich, dass die Schlitze gekrümmt oder anderweitig geformt ausgebildet sind. Die einzelnen Schlitze können beispielsweise geometrisch identisch ausgestaltet sein, hohes Maß an Symmetrie der Schlitzanordnung erzielbar ist.

Gemäß zumindest einer Ausführungsform ist die Vielzahl von Schlitzen rotationssymetrisch mit dem Zentrum der Schlitzanordnung als Symmetriezentrum geformt und angeordnet.

Dadurch kann der für die Schweißbereiche zur Verfügung stehende Platz optimal ausgenutzt werden. Die Rotationssymmetrie ist dabei insbesondere eine diskrete Rotationssymmetrie, also eine N-zählige Rotationssymmetrie, wobei N eine ganze Zahl und größer oder gleich zwei ist. Insbesondere ist N gleich der Gesamtanzahl der Schlitze sowie der Segmente der Schlitzanordnung.

Gemäß zumindest einer Ausführungsform ist jeder Schweißbereich der wenigstens zwei Schweißbereiche zwischen zwei benachbarten Schlitzen der Vielzahl von Schlitzen angeordnet.

Da jedes Paar von Schweißbereichen auf gegenüberliegenden Seiten wenigstens eines Schlitzes angeordnet ist, folgt daraus, dass in jedem Bereich zwischen benachbarten Schlitzen, oben als Segment bezeichnet, maximal einer der Schweißbereiche angeordnet ist. Beispielsweise ist genau ein Schweißbereich pro Segment vorgesehen. Im Fall der genannten rotationssymmetrischen Ausgestaltung ist N dann gleich der Gesamtanzahl der wenigstens zwei Schweißbereiche. Dadurch kann der für die Schweißbereiche zur Verfügung stehende Platz optimal ausgenutzt werden.

Gemäß zumindest einer Ausführungsform sind die Schlitze der Vielzahl von Schlitzen jeweils gekrümmt geformt.

Dadurch lassen sich die einzelnen Segmente zwischen benachbarten Schlitzen umfassender voneinander trennen, sodass eine Akkumulation des Hitzeeintrags an verschiedenen Schweißbereichen weiter reduziert wird.

Gemäß zumindest einer Ausführungsform weisen die wenigstens zwei Schweißbereiche einen ersten Schweißbereich und einen zweiten Schweißbereich aufweisen, wobei eine, insbesondere gedachte, Gerade durch den ersten Schweißbereich, insbesondere mittig oder zentral durch den ersten Schweißbereich, und den zweiten Schweißbereich, insbesondere mittig oder zentral durch den zweiten Schweißbereich, und durch das Zentrum der Schlitzanordnung verläuft.

Dadurch lässt sich der Abstand der Schweißbereiche voneinander weiter erhöhen. Wenn die Gesamtanzahl M der wenigstens zwei Schweißbereiche gerade ist, so kann insbesondere die beschriebene Anordnung der Schweißbereiche zueinander und zu dem Zentrum der Schlitzanordnung für M/2 Paare der Schweißbereiche gegeben sein.

Gemäß zumindest einer Ausführungsform schneidet die Gerade einen der Schlitze, zwischen denen der erste Schweißbereich angeordnet ist, sowie einen der Schlitze, zwischen denen der zweite Schweißbereich angeordnet ist, schneidet.

Demzufolge können der erste Schweißbereich und der zweite Schweißbereich thermisch noch besser voneinander getrennt werden.

Gemäß zumindest einer Ausführungsform weist das Akkupack ein Wärmeableitelement auf, das in thermischem Kontakt mit dem Verbindungsblech steht und das nicht direkt mit den wenigstens zwei Akkuzellen verbunden ist.

Das Wärmeableitelement kann beispielsweise direkt mit dem Verbindungsblech in Kontakt stehen, insbesondere mit diesem verbunden sein, insbesondere auf einer der ersten Akkuzelle und der zweiten Akkuzelle abgewandten Seite des Verbindungsblechs.

Das Verbindungsblech kann im Betrieb des Akkupacks einem Bereich des Akkupacks entsprechen, an dem eine signifikante Wärmeentwicklung stattfindet. Das Wärmeableitelement führt damit zu einer verbesserten Wärmeableitung. Das Wärmeableitelement kann außerdem auch elektrisch leitfähig sein und dadurch die Stromdichte im Verbindungsblech reduzieren.

Durch die zweiteilige Ausführung mit dem Verbindungsblech und dem Wärmeableitelement können die Materialen und sonstige Eigenschaften, etwa Blechstärken, des Verbindungsblechs und des Wärmeableitelements auch unabhängig oder weitgehend unabhängig voneinander und damit jeweils optimal für deren jeweiligen primären Zweck gewählt werden. So kann das Verbindungsblech optimal für die Verschweißung mit den Akkuzellen gewählt und dimensioniert werden und das Wärmeableitelement optimal zur Wärmeableitung.

Gemäß zumindest einer Ausführungsform ist das Wärmeableitelement als Wärmeableitblech ausgeführt, insbesondere aus Metall, oder enthält das Wärmeableitblech.

Gemäß zumindest einer Ausführungsform ist eine Dicke des Wärmeableitblechs größer ist als eine Dicke des Verbindungsblechs.

Dadurch ist für das Verschweißen des Verbindungsblechs mit den Akkuzellen ein kleinerer Energieeintrag erforderlich und die Wärmeableitung durch das Wärmeableitblech kann erhöht werden.

Beispielsweise liegt die Dicke des Verbindungsblechs im Bereich [0,3 mm, 1,0 mm] oder im Bereich [0,3 mm, 0,8 mm] und die Dicke des Wärmeableitblechs im Bereich [0,8 mm, 2,0 mm] oder im Bereich [1 mm, 2,0 mm].

Beispielsweise weist das Wärmeableitelement, insbesondere das Wärmeableitblech, eine höhere Wärmeleitfähigkeit als das Verbindungsblech auf. Dies kann insbesondere durch unterschiedliche Materialien des Wärmeableitblechs beziehungsweise des Verbindungsblechs erreicht werden.

Gemäß zumindest einer Ausführungsform ist das Wärmeableitelement thermisch mit einer Innenwand eines Außengehäuses des Akkupacks, innerhalb dessen die wenigstens zwei Akkuzellen angeordnet sind, verbunden.

Dadurch kann die im Betrieb des Akkupacks erzeugte Wärme besser abgeführt werden, insbesondere an das Außengehäuse des Akkupacks. Der wärmeableitende Effekt kann durch entsprechende geeignete Auswahl der Form und/oder Materialien des Außengehäuses beziehungsweise derjenigen Komponente des Außengehäuses, welche die Innenwand bildet, noch weiter verbessert werden.

Darüber hinaus führt die mechanische Verbindung des Verbindungsblech über das Wärmeableitelement mit der Innenwand des Außengehäuses zu einer erhöhten mechanischen Stabilität. Dies kann insbesondere bei Stößen oder Erschütterungen zu einer verbesserten Robustheit des Akkupacks führen. Insbesondere kann das Risiko dafür reduziert werden, dass bei äußeren Einwirkungen wie Stößen oder Erschütterungen das Verbindungsblech beschädigt wird oder eine elektrische Verbindung zwischen dem Verbindungsblech und den Akkuzellen beschädigt wird oder beeinträchtigt wird und so weiter. Das Wärmeableitelement kann daher vorteilhaft sowohl zum verbesserten Wärmemanagement als auch zur verbesserten mechanischen Stabilität des Akkupacks beitragen.

Gemäß zumindest einer Ausführungsform weist das Außengehäuse eine Komponente aus wärmeleitendem Kunststoff aufweist, welche die Innenwand des Außengehäuses bildet.

Dadurch kann die durch das Wärmeableitelement an das Außengehäuse abgegebene Wärme verbessert an die äußere Umgebung des Akkupacks abgeführt werden.

Gemäß zumindest einer Ausführungsform überdeckt das Wärmeableitelement das Verbindungsblech teilweise und weist eine Aussparung aufweist, durch welche die wenigstens zwei Schweißbereiche zugänglich sind, insbesondere für ein Schweißwerkzeug zur Verschweißung des Verbindungsblechs mittels der wenigstens zwei Schweißbereiche mit der ersten Akkuzelle.

Dadurch kann das Verbindungsblech nach der Verbindung des Wärmeableitelements mit dem Verbindungsblech mittels der wenigstens zwei Schweißbereiche mit der ersten Akkuzelle verbunden werden. Ein eventueller Wärmeeintrag in die erste Akkuzelle beim Verbinden, beispielsweise Verschweißen, des Wärmeableitelements mit dem Verbindungsblech kann dadurch vermieden werden. Analog kann eine weitere Aussparung des Wärmeableitelements im Bereich der zweiten Akkuzelle vorgesehen sein.

Gemäß zumindest einer Ausführungsform sind eine Stirnseite der ersten Akkuzelle und eine Stirnseite der zweiten Akkuzelle der Innenwand des Außengehäuses zugewandt.

Gemäß zumindest einer Ausführungsform haben die wenigstens zwei Schweißbereiche von einem Mittelpunkt der Stirnseite der Zellhülle der ersten Akkuzelle jeweils mindestens einen Abstand von 1 mm.

Mit anderen Worten ist der Mittelpunkt der Stirnseite der Zellhülle der ersten Akkuzelle frei von Schweißpunkten der ersten Schweißpunkte.

Das Freilassen des Mittelpunkts der Stirnseite der Zellhülle kann aus verschiedenen Gründen vorteilhaft sein. Durch die Platzierung der Schweißpunkte außerhalb des Mittelpunkts kann eine entsprechende Beschädigung beim Schweißen, also beim Herstellen, des Akkupacks vermieden werden. Des Weiteren weisen Akkuzellen, insbesondere zylindrische Zellen, häufig eine sogenannte Stromunterbrechungsvorrichtung, CID (englisch: current interrupt device), auf, das ebenfalls an der Stirnseite der Zellhülle angebracht sind. Auch eine Beschädigung solcher CIDs durch das Verschweißen kann durch die Platzierung außerhalb des Mittelpunkts vermieden werden.

Gemäß zumindest einer Ausführungsform weist die Stirnseite der Zellhülle der ersten Akkuzelle einen Rand, insbesondere eine Außenkontur, in Form eines ersten Kreises auf und die wenigstens zwei Schweißbereiche haben von dem Mittelpunkt des ersten Kreises jeweils mindestens einen Abstand, der mindestens zehn Prozent des Durchmessers des ersten Kreises beträgt.

Auch auf diese Weise wird erzielt, dass der Mittelpunkt der Stirnseite von Schweißbereichen entsprechend freigehalten werden kann. Die oben genannten Vorteile ergeben sich dementsprechend auch in solchen Ausführungsformen.

Gemäß zumindest einer Ausführungsform weist zumindest ein Teil der wenigstens zwei Schweißbereiche eine eindimensionale oder zweidimensionale Ausdehnung auf.

Dadurch kann zum Einen beim Verschweißen des Verbindungsblechs mit den Akkuzellen die eingetragene Wärme besser verteilt werden und zum Anderen die lokale Stromdichte im Betrieb des Akkupacks verringert werden.

Gemäß zumindest einer Ausführungsform sind die erste Akkuzelle und die zweite Akkuzelle gemäß einem Tabless-Design ausgestaltet.

Dadurch wird die maximale Stromtragfähigkeit der ersten und der zweiten Akkuzelle erhöht, sodass die Erfindung besonders vorteilhaft ist.

Gemäß zumindest einer Ausführungsform sind die erste Akkuzelle und die zweite Akkuzelle zylindrische Zellen. Der erste Elektrodenbereich befindet sich an einer Stirnseite der Zellhülle der ersten Akkuzelle und der zweite Elektrodenbereich befindet sich an einer Stirnseite der Zellhülle der zweiten Akkuzelle.

Die Stirnseite kann dabei insbesondere eine Grund- oder Deckfläche der zylindrischen Grundform sein, also eine Seite, die nicht einer Mantelfläche der zylindrischen Grundform entspricht.

Die Zellhülle kann insbesondere aus einem massiven Material bestehen beziehungsweise aus mehreren Teilen massiven Materials. Das massive Material kann beispielsweise ein Metall sein.

Besonders bei zylindrischen Akkuzellen können sehr hohe Stromtragfähigkeiten realisiert werden, beispielsweise durch die Implementierung sogenannter Tabless-Designs zur internen Kontaktierung der aktiven Schichten mit der Innenseite der Zellhülle. In solchen Ausführungsformen ist die Wärmeentwicklung an dem Verbindungselement besonders kritisch, sodass sich die Erfindung hier besonders vorteilhaft darstellt.

Gemäß zumindest einer Ausführungsform ist das Akkupack als Wechsel-Akkupack ausgestaltet.

Gemäß einem weiteren Aspekt der Erfindung wird ein System angegeben, welches ein erfindungsgemäßes Akkupack sowie ein Elektrogerät beinhaltet, welches mittels des Akkupacks betreibbar ist.

Insbesondere beinhaltet das Elektrogerät einen Elektromotor oder einen sonstigen elektrischen Verbraucher, der mit dem Akkupack mit Energie versorgt werden kann.

Gemäß zumindest einer Ausführungsform besteht das Verbindungsblech aus einer Kupfer-Eisen-Legierung und/oder das Wärmeableitblech besteht aus einer Kupfer-Eisen-Legierung.

Gemäß einem weiteren Aspekt der Erfindung wird ein Verfahren zur elektrischen Verbindung von Akkuzellen eines Akkupacks für ein Elektrogerät angegeben, insbesondere eines erfindungsgemäßen Akkupacks. Dabei werden wenigstens zwei Akkuzellen, die jeweils eine Zellhülle aufweisen, bereitgestellt. Ein Verbindungsblech zur elektrischen Verbindung eines ersten Elektrodenbereichs an der Zellhülle einer ersten Akkuzelle der wenigstens zwei Akkuzellen wird mit einem zweiten Elektrodenbereich an der Zellhülle einer zweiten Akkuzelle der wenigstens zwei Akkuzellen mit der Zellhülle der ersten Akkuzelle an wenigstens zwei Schweißbereichen verschweißt. Die wenigstens zwei Schweißbereiche werden dabei derart positioniert, dass für jedes Paar von Schweißbereichen der wenigstens zwei Schweißbereiche die beiden Schweißbereiche des jeweiligen Paars auf gegenüberliegenden Seiten zumindest eines Schlitzes einer Schlitzanordnung des Verbindungsblechs liegen.

Insbesondere kann die Verschweißung des Verbindungsblechs mit der Zellhülle einer zweiten Akkuzelle der mindestens zwei Akkuzellen analog zur Verschweißung des Verbindungsblechs mit der Zellhülle der ersten Akkuzelle ausgeführt werden.

Gemäß zumindest einer Ausführungsform wird das Verbindungsblech durch Punktschweißen mit der Zellhülle der ersten Akkuzelle und/oder mit der Zellhülle der zweiten Akkuzelle verschweißt.

Dadurch kann der Platzbedarf für die einzelnen Schweißbereiche minimiert werden.

Gemäß zumindest einer Ausführungsform wird das Verbindungsblech durch Laserschweißen oder Reibschweißen mit der Zellhülle der ersten Akkuzelle und/oder mit der Zellhülle der zweiten Akkuzelle verschweißt.

Dadurch können auch im Wesentlichen eindimensionale oder zweidimensionale Schweißbereiche realisiert werden, was die lokale Stromdichte im Betrieb des Akkupacks weiter reduziert.

Gemäß zumindest einer Ausführungsform wird ein Wärmeableitelement mit dem Verbindungsblech thermisch leitfähig verbunden, beispielsweise verschweißt, bevor das Verbindungsblech mit der Zellhülle der ersten Akkuzelle verschweißt wird, sodass das Wärmeableitelement das Verbindungsblech teilweise überdeckt, wobei das Verbindungsblech im Bereich einer Aussparung des Wärmeableitelements mit der Zellhülle der ersten Akkuzelle verschweißt wird.

Dadurch kann das Wärmeableitetelement mit den oben genannten Vorteilen appliziert werden, ohne dass dadurch beim Verbinden des Wärmeableitung Elements mit dem Verbindungsblech ein Hitzeeintrag in die Akkuzellen stattfindet.

Weitere Ausführungsformen des erfindungsgemäßen Verfahrens folgen unmittelbar aus den verschiedenen Ausgestaltungen des erfindungsgemäßen Akkupack und umgekehrt. Insbesondere lassen sich einzelne Merkmale und entsprechende Erläuterungen sowie Vorteile bezüglich der verschiedenen Ausführungsformen zu dem erfindungsgemäßen Akkupack analog auf entsprechende Ausführungsformen des erfindungsgemäßen Verfahrens übertragen.

Weitere Merkmale der Erfindung sind aus den Ansprüchen, den Figuren und der Figurenbeschreibung ersichtlich. Die oben in der Beschreibung genannten Merkmale und Merkmalskombinationen sowie die unten in der Figurenbeschreibung genannten und/oder in den Figuren dargestellten Merkmale und Merkmalskombinationen können nicht nur in der jeweils angegebenen Kombination, sondern auch in anderen Kombinationen von der Erfindung umfasst sein. Insbesondere können auch Ausführungsformen und Kombinationen von Merkmalen, die nicht alle Merkmale eines ursprünglich formulierten Anspruchs aufweisen, von der Erfindung umfasst sein. Darüber hinaus können Ausführungsformen und Merkmalskombinationen, die über die in den Ansprüchen genannten Merkmalskombinationen hinausgehen oder von ihnen abweichen, die Erfindung beinhalten.

Im Folgenden wird die Erfindung unter Bezugnahme auf spezifische beispielhafte Ausführungsformen und entsprechende schematische Zeichnungen näher erläutert. In den Zeichnungen können identische oder funktionsgleiche Elemente mit denselben Bezugszeichen versehen sein. Die Beschreibung identischer oder funktionsgleicher Elemente wird nicht notwendigerweise in Bezug auf die verschiedenen Figuren wiederholt.

In den Figuren zeigen:
- Fig. 1: eine schematische Darstellung einer beispielhaften Ausführungsform eines erfindungsgemäßen Akkupacks;
- Fig. 2: eine schematische Schnittdarstellung eines Verbindungsblechs in einer weiteren beispielhaften Ausführungsform eines erfindungsgemäßen Akkupacks;
- Fig. 3: eine schematische Schnittdarstellung eines Verbindungsblechs in einer weiteren beispielhaften Ausführungsform eines erfindungsgemäßen Akkupacks;
- Fig. 4: eine schematische Schnittdarstellung eines Verbindungsblechs in einer weiteren beispielhaften Ausführungsform eines erfindungsgemäßen Akkupacks;
- Fig. 5: eine schematische Schnittdarstellung eines Verbindungsblechs in einer weiteren beispielhaften Ausführungsform eines erfindungsgemäßen Akkupacks;
- Fig. 6: eine schematische Draufsicht eines Verbindungsblechs in einer weiteren beispielhaften Ausführungsform eines erfindungsgemäßen Akkupacks;
- Fig. 7: eine schematische Draufsicht eines Verbindungsblechs in einer weiteren beispielhaften Ausführungsform eines erfindungsgemäßen Akkupacks;
- Fig. 8: eine schematische Schnittdarstellung und eine schematische Draufsicht eines Verbindungsblechs und eines Wärmeableitelements in einer weiteren beispielhaften Ausführungsform eines erfindungsgemäßen Akkupacks;
- Fig. 9: eine schematische Darstellung einer Schlitzanordnung eines Verbindungsblechs in einer weiteren beispielhaften Ausführungsform eines erfindungsgemäßen Akkupacks;
- Fig. 10: eine schematische Darstellung einer Schlitzanordnung eines Verbindungsblechs in einer weiteren beispielhaften Ausführungsform eines erfindungsgemäßen Akkupacks;
- Fig. 11: eine schematische Darstellung einer Schlitzanordnung eines Verbindungsblechs in einer weiteren beispielhaften Ausführungsform eines erfindungsgemäßen Akkupacks;
- Fig. 12: eine schematische Darstellung einer Schlitzanordnung eines Verbindungsblechs in einer weiteren beispielhaften Ausführungsform eines erfindungsgemäßen Akkupacks;
- Fig. 13: eine schematische Draufsicht eines Verbindungsblechs und eines Wärmeableitelements in einer weiteren beispielhaften Ausführungsform eines erfindungsgemäßen Akkupacks;
- Fig. 14: eine schematische Draufsicht eines Verbindungsblechs und eines Wärmeableitelements in einer weiteren beispielhaften Ausführungsform eines erfindungsgemäßen Akkupacks; und
- Fig. 15: eine schematische Draufsicht eines Verbindungsblechs und eines Wärmeableitelements in einer weiteren beispielhaften Ausführungsform eines erfindungsgemäßen Akkupacks;

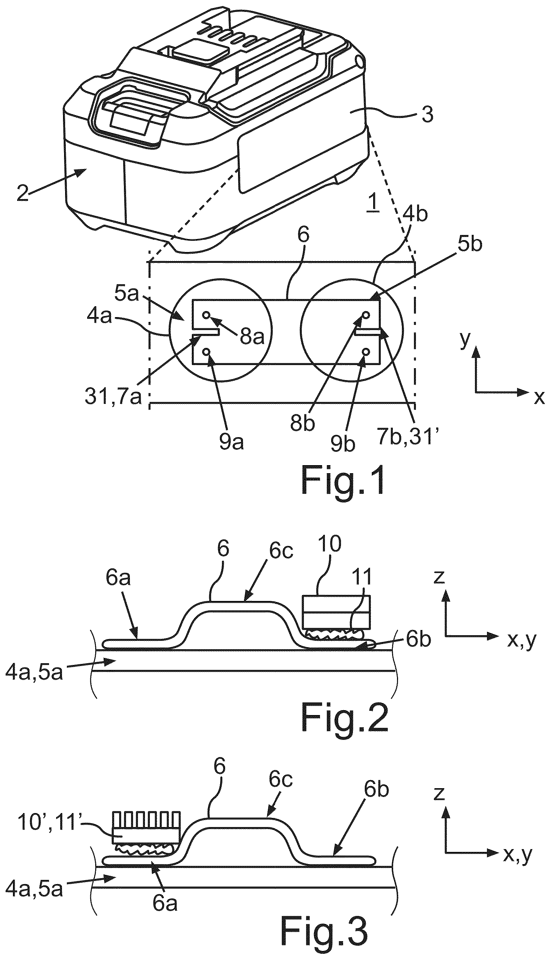

In Fig. 1 ist eine schematische Darstellung einer beispielhaften Ausführungsform eines erfindungsgemäßen Akkupacks 1 gezeigt.

Das Akkupack 1 enthält wenigstens zwei Akkuzellen 4a, 4b, die jeweils eine Zellhülle aufweisen. Das Akkupack 1 weist ein Verbindungsblech 6 auf, welches einen ersten Elektrodenbereich 5a an der Zellhülle einer ersten Akkuzelle 4a der wenigstens zwei Akkuzellen 4a, 4b mit einem zweiten Elektrodenbereich 5b an der Zellhülle einer zweiten Akkuzelle 4b der wenigstens zwei Akkuzellen 4a, 4b elektrisch miteinander verbindet. Dabei ist das Verbindungsblech 6 mit der Zellhülle der ersten Akkuzelle 4a an wenigstens zwei Schweißbereichen 8a, 9a verschweißt ist. Insbesondere ist das Verbindungsblech 6 auch mit der Zellhülle der zweiten Akkuzelle 4b an wenigstens zwei weiteren Schweißbereichen 8b, 9b verschweißt.

Das Verbindungsblech 6 weist eine Schlitzanordnung 31 auf, wobei für jedes Paar von Schweißbereichen 8a, 9a der wenigstens zwei Schweißbereiche 8a, 9a die Schweißbereiche 8a, 9a des jeweiligen Paars auf gegenüberliegenden Seiten zumindest eines Schlitzes 7a der Schlitzanordnung 31 liegen. Insbesondere weist das Verbindungsblech 6 weist eine weitere Schlitzanordnung 31' auf, wobei für jedes Paar von weiteren Schweißbereichen 8b, 9b der wenigstens zwei weiteren Schweißbereiche 8b, 9b die weiteren Schweißbereiche 8b, 9b des jeweiligen Paars auf gegenüberliegenden Seiten zumindest eines weiteren Schlitzes 7b der weiteren Schlitzanordnung 31' liegen.

In Fig. 2 ist eine schematische Schnittdarstellung eines Verbindungsblechs 6 in einer weiteren beispielhaften Ausführungsform eines erfindungsgemäßen Akkupacks 1 gezeigt.

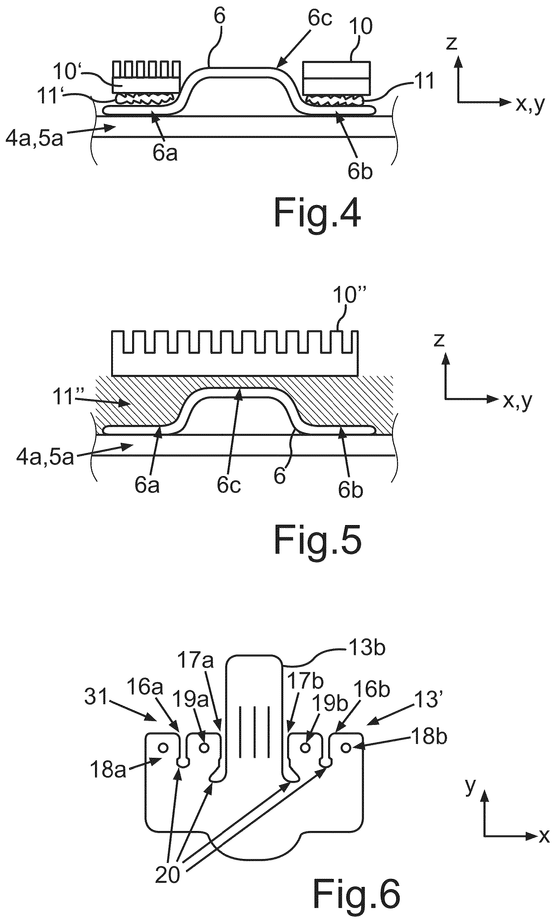

Hier ist das Verbindungsblech 6 gekröpft ausgeführt, sodass zwei in derselben Ebene liegende Teilbereiche 6a, 6b ausbilden, die im ersten Elektrodenbereich 5a mit der Zellhülle der ersten Akkuzelle 4a befestigt sind. Ein zwischen den Teilbereichen 6a, 6b ausgebildeter erhabener Teilbereich 6c ist von dem ersten Elektrodenbereich 5a beabstandet. Beispielsweise kann ein Kühlkörper 10 im Teilbereich 6b an der dem ersten Elektrodenbereich 5a abgewandten Seite des Teilbereichs 6b angebracht sein, beispielsweise mittels eines wärmeleitfähigen Klebstoffs 11. Alternativ kann ein weiterer Kühlkörper 10' im Teilbereich 6a an der dem ersten Elektrodenbereich 5a abgewandten Seite des Teilbereichs 6a angebracht sein, beispielsweise mittels eines wärmeleitfähigen Klebstoffs 11', wie in Fig. 3 schematisch dargestellt. Es können auch sowohl der Kühlkörper 10 im Teilbereich 6b als auch der weitere Kühlkörper 11 im Teilbereich 6a vorgesehen sein, wie in Fig. 4 schematisch dargestellt.

In Fig. 5 ist eine schematische Schnittdarstellung eines Verbindungsblechs 6 in einer weiteren beispielhaften Ausführungsform eines erfindungsgemäßen Akkupacks 1 gezeigt.

Hier ist das Verbindungsblech 6 ebenfalls gekröpft ausgeführt, wie bezüglich der Fig. 2 beschrieben. Anstelle der Kühlkörper 10, 10' ist in diesem Ausführungsbeispiel ein Kühlkörper 10" vorgesehen, der sich über alle drei Teilbereich 6a, 6b, 6c erstreckt. Der Kühlkörper 10" kann beispielsweise ebenfalls mittels eines wärmeleitfähigen Klebstoffs 11" an dem Verbindungsblech 6 befestigt sein.

In Fig. 6 ist eine schematische Draufsicht eines Verbindungsblechs 6 in einer weiteren beispielhaften Ausführungsform eines erfindungsgemäßen Akkupacks 1 gezeigt.

Dabei weist das Verbindungsblech 6 fünf nebeneinanderliegende Laschen auf, wobei eine mittlere Lasche 13b länger als die übrigen Laschen ist und zungenförmig über diese übersteht. Die einzelnen Laschen sind durch Schlitze 16a, 17a, 16a, 17b voneinander getrennt. Der Schlitz 16a zwischen den beiden Laschen links außen stellt die Schlitzanordnung 31 dar und der Schlitz 16a zwischen den beiden Laschen rechts außen stellt die weitere Schlitzanordnung 31' dar. Demensprechend ist das Verbindungsblech 6 an einem Schweißbereich 18a auf der Lasche ganz links und einem Schweißbereich 19a auf der zweiten Lasche von links mit dem ersten Elektrodenbereich 5a verbunden und an einem Schweißbereich 18b auf der Lasche ganz rechts und einem Schweißbereich 19b auf der zweiten Lasche von rechts mit dem zweiten Elektrodenbereich 5b verbunden.

Die Schlitze 16a, 16b, 17a, 17b, 18a, 18b sind beispielsweise einseitig jeweils offen und/oder weisen auf der gegenüberliegenden Seite jeweils Abrundungen 20 auf. Die Abrundungen 20 reduzieren einerseits mechanische Spannungen und verlängern andererseits auch den Wärmepfad zwischen den Schweißbereichen 18a, 19a beziehungsweise zwischen den Schweißbereichen 18b, 19b.

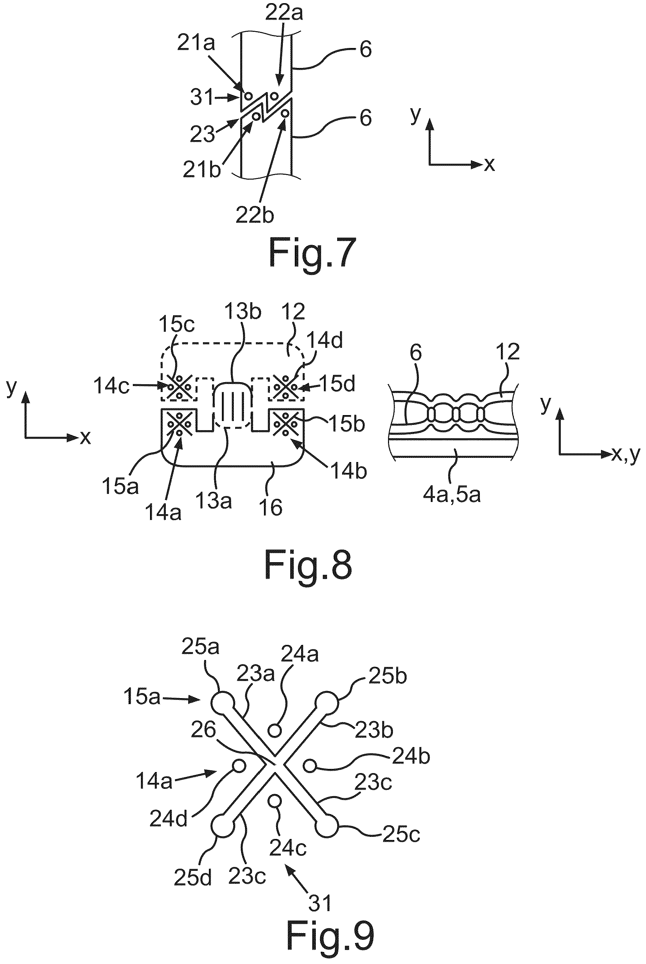

In Fig. 7 ist eine schematische Draufsicht eines Verbindungsblechs 6 in einer weiteren beispielhaften Ausführungsform eines erfindungsgemäßen Akkupacks 1 gezeigt.

In diesem Ausführungsbeispiel weist die Schlitzanordnung 31 einen zickzackförmigen Schlitz 23 auf. Anders ausgedrückt hat der Schlitz 23 die Form des Buchstaben "N". Nochmals anders ausgedrückt weisen die beiden dem Schlitz 23 zugewandten Seiten des Verbindungsblechs 6 die Form von jeweils zwei rechtwinkligen Dreiecken auf. In jedem der Dreiecke ist beispielsweise ein Schweißbereich 21a, 21b, 22a, 22b angeordnet.

Eine weitere beispielhafte Ausführungsform ist in Fig. 8 dargestellt, dabei links in Draufsicht und rechts in einer entsprechenden Seitenansicht.

Das Akkupack 1 weist hierbei ein Wärmeableitblech 12 auf, das in thermischem Kontakt mit dem Verbindungsblech 6 steht und das nicht direkt mit den wenigstens zwei Akkuzellen 4a, 4b verbunden ist, sondern insbesondere auf einer den wenigstens zwei Akkuzellen 4a, 4b abgewandten Seite des Verbindungsblechs 6 angeordnet ist. Insbesondere weist das Wärmeableitblech 12 eine Dicke auf, die größer ist als eine Dicke des Verbindungsblechs 6.

Das Wärmeableitblech 12 und das Verbindungsblech 6 sind dabei, wie insbesondere in der Seitendarstellung rechts erkennbar, beispielsweise miteinander verschweißt. In der Draufsicht links ist erkennbar, dass diese Verschweißung im Bereich zweier überlappender Zungenelemente 13a, 13b des Verbindungsblechs 6 beziehungsweise des Wärmeableitblechs 12 realisiert wurde. In dem Ausführungsbeispiel der Fig. 8 sind Schweißbereiche 14a zur Verbindung des Verbindungsblechs 6 mit dem ersten Elektrodenbereich 5a gezeigt, sowie Schweißbereiche 14b zur Verbindung des Verbindungsblechs 6 mit dem zweiten Elektrodenbereich 5b und Schweißbereiche 14c, 14d zur Verbindung des Wärmeableitblechs 12 mit entsprechenden Elektrodenbereichen weiterer Akkuzellen des Akkupacks 1. Mit anderen Worten dient das Wärmeableitblech 12 in solchen Ausführungsformen gleichzeitig als elektrisches Verbindungselement für weitere Akkuzellen.

Es ist auch möglich, dass in manchen Ausführungsformen die Schweißbereiche 14c des Wärmeableitblechs 12 mit dem ersten Elektrodenbereich 5a der ersten Akkuzelle 4a verbunden sind und die Schweißbereiche 14d des Wärmeableitblechs 12 mit dem zweiten Elektrodenbereich 5b der zweiten Akkuzelle 4b. Das Wärmeableitblech 12 dient dann zusätzlich als weiteres elektrisches Verbindungselement zur elektrischen Verschaltung der ersten und/oder zweiten Akkuzelle 4a, 4b.

Wie schematisch in Fig. 9 dargestellt, kann die Schlitzanordnung 31 beispielsweise eine Vielzahl von Schlitzen 23a, 23b, 23c, 23d auf, beispielsweise vier, die sich ausgehend von einem Zentrum 26 der Schlitzanordnung 31 jeweils radial nach außen erstrecken.

Beispielsweise ist die Vielzahl von Schlitzen 23a, 23b, 23c, 23d rotationssymetrisch mit dem Zentrum 26 der Schlitzanordnung 31 als Symmetriezentrum geformt und angeordnet. Jeder der wenigstens zwei Schweißbereiche 24a, 24b, 24c, 24d ist zwischen zwei benachbarten der Vielzahl von Schlitzen 23a, 23b, 23c, 23d angeordnet. Insbesondere ist zwischen jedem Paar benachbarter Schlitze 23a, 23b, 23c, 23d genau ein Schweißbereich 24a, 24b, 24c, 24d angeordnet.

Wie in Fig. 9 gezeigt, können sich die Schlitze 23a, 23b, 23c, 23d beispielsweise geradlinig vom Zentrum 26 aus nach außen erstrecken. Optional kann an den äußeren Enden der Schlitze 23a, 23b, 23c, 23d jeweils eine Abrundung 25a, 25b, 25c, 25d vorgesehen sein.

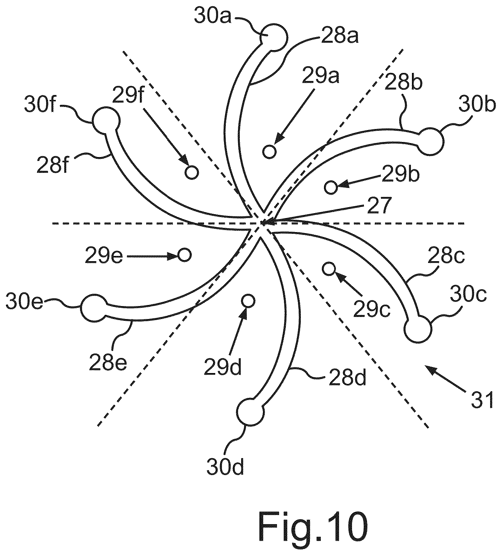

Auch im Beispiel der Fig. 10 weist die Schlitzanordnung 31 eine Vielzahl von Schlitzen 28a, 28b, 28c, 28d, 28e, 28f auf, beispielsweise sechs, die sich ausgehend von einem Zentrum 26 der Schlitzanordnung 31 jeweils radial nach außen erstrecken. Beispielsweise ist die Vielzahl von Schlitzen 28a, 28b, 28c, 28d, 28e, 28f rotationssymetrisch mit dem Zentrum 27 der Schlitzanordnung 31 als Symmetriezentrum geformt und angeordnet. Jeder der wenigstens zwei Schweißbereiche 29a, 29b, 29c, 29d, 29e, 29f ist zwischen zwei benachbarten der Vielzahl von Schlitzen 28a, 28b, 28c, 28d, 28e, 28f angeordnet. Insbesondere ist zwischen jedem Paar benachbarter Schlitze 28a, 28b, 28c, 28d, 28e, 28f genau ein Schweißbereich 29a, 29b, 29c, 29d, 29e, 29f angeordnet.

Beispielsweise können die Schlitze 28a, 28b, 28c, 28d, 28e, 28f jeweils gekrümmt geformt sein, wobei insbesondere die Rotationssymmetrie bestehen bleibt. Optional kann an den äußeren Enden der Schlitze 23a, 23b, 23c, 23d jeweils eine Abrundung 30a, 30b, 30c, 30d vorgesehen sein.

Beispielsweise ist die Anzahl N der Schlitze 28a, 28b, 28c, 28d, 28e, 28f gerade, sodass N/2 Paare von bezüglich des Zentrums 27 gegenüberliegenden Schlitzen 28a, 28b, 28c, 28d, 28e, 28f gegeben ist. Dementsprechend ist beispielsweise auch die Anzahl der Schweißbereiche 29a, 29b, 29c, 29d, 29e, 29f gleich N und es sind N/2 Paare von bezüglich des Zentrums 27 gegenüberliegenden Schweißbereichen 29a, 29b, 29c, 29d, 29e, 29f gegeben. Eine Verbindungsgerade zwischen den gegenüberliegenden Schweißbereichen 29a, 29b, 29c, 29d, 29e, 29f der einzelnen Paare verläuft beispielsweise durch das Zentrum 27 der Schlitzanordnung 31. Beispielsweise verläuft in Fig. 10 die Verbindungsgerade zwischen den Schweißbereichen 29a und 29d durch das Zentrum 27, ebenso wie die Verbindungsgerade zwischen den Schweißbereichen 29b und 29e und die Verbindungsgerade zwischen den Schweißbereichen 29c und 29f.

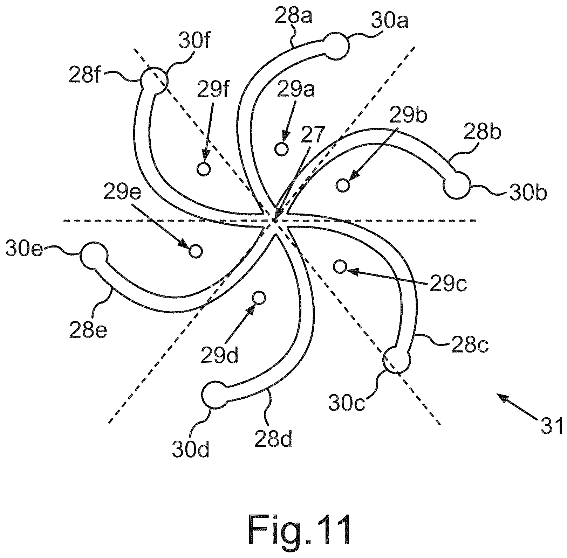

In Fig. 11 ist eine Variante der Schlitzanordnung 31 schematisch dargestellt, die auf der Ausführungsform der Fig. 10 basiert. In dem Beispiel der Fig. 11 sind die Schlitze 28a, 28b, 28c, 28d, 28e, 28f jedoch stärker gekrümmt. Dies führt dazu, dass die genannten Verbindungsgeraden jeweils einen der Schlitze 28a, 28b, 28c, 28d, 28e, 28f, zwischen denen der erste Schweißbereich 28a, 28b, 28c, 28d, 28e, 28f des entsprechenden Paars angeordnet ist, sowie einen der Schlitze 28a, 28b, 28c, 28d, 28e, 28f, zwischen denen der zweite Schweißbereich 28a, 28b, 28c, 28d, 28e, 28f des entsprechenden Paars angeordnet ist, schneidet.

Beispielsweise schneidet in Fig. 11 die Verbindungsgerade zwischen den Schweißbereichen 29a und 29d die Schlitze 28a und 28d, die Verbindungsgerade zwischen den Schweißbereichen 29b und 29e schneidet die Schlitze 28b und 28e und die Verbindungsgerade zwischen den Schweißbereichen 29c und 29f schneidet die Schlitze 28c und 28f.

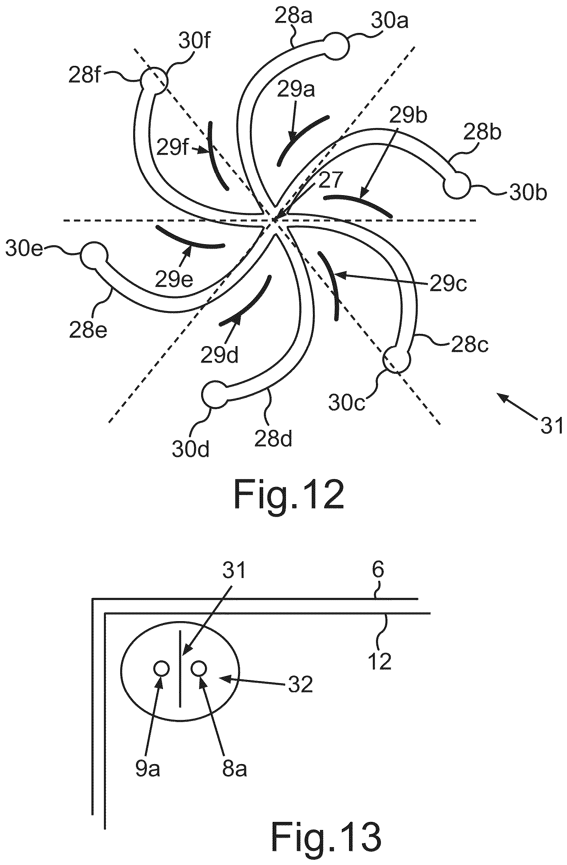

Die Schweißbereiche 8a, 8b, 9a, 9b, 14a, 14b, 14c, 14d, 18a, 18b, 19a, 19b, 21a, 21b, 22a, 22b, 24a, 24b, 24c, 24d, 29a, 29b, 29c, 29d können jeweils als Schweißpunkte, also im Wesentlichen Null-dimensionale Schweißbereiche, ausgestaltet sein, wie in den Figuren Fig. 1 und Fig. 6 bis Fig. 11, sowie Fig. 13 bis Fig. 15 angedeutet. Dies ist jedoch nicht erforderlich. Es ist auch möglich, wie in Fig. 12 angedeutet, dass die Schweißbereiche 8a, 8b, 9a, 9b, 14a, 14b, 14c, 14d, 18a, 18b, 19a, 19b, 21a, 21b, 22a, 22b, 24a, 24b, 24c, 24d, 29a, 29b, 29c, 29d als linienförmige beziehungsweise im Wesentlichen eindimensionale Schweißbereiche, oder flächige, also zweidimensionale Schweißbereiche, ausgebildet sind.

Fig. 13 zeigt eine schematische Draufsicht eines Verbindungsblechs 6 und eines Wärmeableitblechs 12 in einer weiteren beispielhaften Ausführungsform eines erfindungsgemäßen Akkupacks 1.

Dabei überdeckt das Wärmeableitblech 12 das Verbindungsblech 6 nur teilweise und weist eine Aussparung 32 auf, durch welche die wenigstens zwei Schweißbereiche 8a, 9a zugänglich sind. Je nach Anordnung und Ausgestaltung der Schlitzanordnung 31 und der Schweißbereiche 8a, 9a kann sich die geometrisch Form der Aussparung 32 unterscheiden. In Fig. 13 ist sie beispielsweise kreisrund dargestellt.

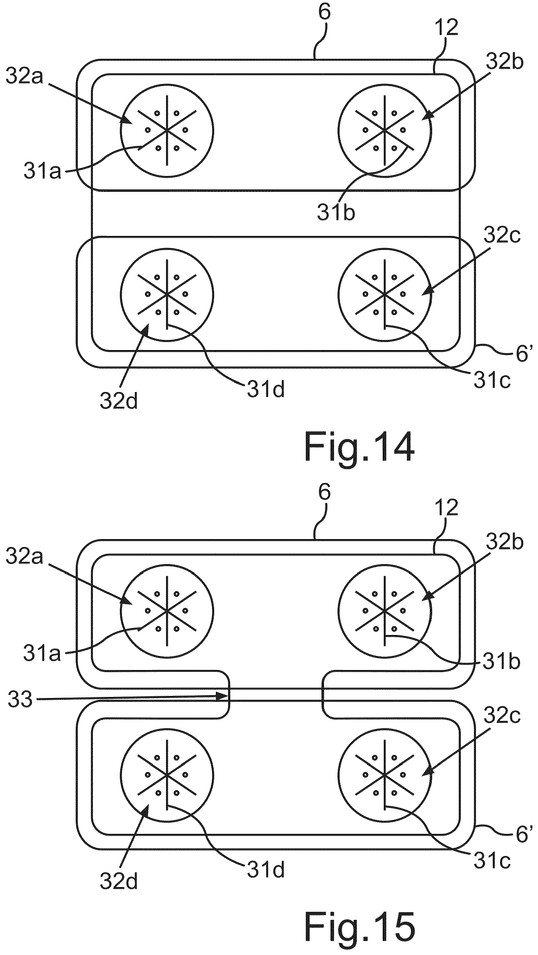

Fig. 14 zeigt eine schematische Draufsicht eines Verbindungsblechs 6 und eines Wärmeableitblechs 12 in einer weiteren beispielhaften Ausführungsform eines erfindungsgemäßen Akkupacks 1.

Das Wärmeableitblech 12 überdeckt das Verbindungsblech 6 und ein weiteres Verbindungsblech 6' jeweils teilweise. Das Verbindungsblech 6 weist die Schlitzanordnung 31a und die weitere Schlitzanordnung 31b auf. Die Schlitzanordnung 31a und die weitere Schlitzanordnung 31b weisen beispielsweise jeweils sechs geradlinige und rotationssymmetrisch angeordnete Schlitze auf. Zwischen benachbarten Schlitzen der Schlitzanordnung 31a ist jeweils ein erster Schweißbereich zur Verbindung des Verbindungsblechs 6 mit dem ersten Elektrodenbereich 4a angeordnet. Zwischen benachbarten Schlitzen der weiteren Schlitzanordnung 31b ist jeweils ein zweiter Schweißbereich zur Verbindung des Verbindungsblechs 6 mit dem zweiten Elektrodenbereich 4b angeordnet.

Das weitere Verbindungsblech 6' weist eine Schlitzanordnung 31c und eine weitere Schlitzanordnung 31d auf. Die Schlitzanordnung 31c und die weitere Schlitzanordnung 31d weisen beispielsweise jeweils sechs geradlinige und rotationssymmetrisch angeordnete Schlitze auf. Zwischen benachbarten Schlitzen der Schlitzanordnung 31c ist jeweils ein weiterer erster Schweißbereich zur Verbindung des weiteren Verbindungsblechs 6' mit einem weiteren ersten Elektrodenbereich einer weiteren ersten Akkuzelle angeordnet. Zwischen benachbarten Schlitzen der weiteren Schlitzanordnung 31d ist jeweils ein weiterer zweiter Schweißbereich zur Verbindung des weiteren Verbindungsblechs 6' mit einem weiteren zweiten Elektrodenbereich einer weiteren zweiten Akkuzelle angeordnet.

Das Wärmeableitblech 12 weist beispielsweise für jede der vier Schlitzanordnungen 31a, 31b, 31c, 31d jeweils eine entsprechende Aussparung 32a, 32b, 32c, 32d auf, durch welche die jeweiligen Schweißbereiche zugänglich sind.

Im Beispiel der Fig. 14 ist die Außenkontur des Wärmeableitblechs 12 beispielsweise im Wesentlichen rechteckig ausgestaltet.

Fig. 15 zeigt eine Variante der Ausführungsform aus Fig. 14, bei der die Außenkontur des Wärmeableitblechs 12 im Vergleich zu Fig. 14 eine Einschnürung zwischen den Verbindungsblechen 6, 6' auf. Dadurch kann ein gegebenenfalls unerwünschter Wärmefluss vom Bereich um die Aussparung 32a in Richtung der Aussparung 32c oder umgekehrt reduziert werden. Analog kann ein gegebenenfalls unerwünschter Wärmefluss vom Bereich um die Aussparung 32b in Richtung der Aussparung 32d oder umgekehrt reduziert werden.

### BEZUGSZEICHENLISTE:

- 1: Akkupack
- 2: Außengehäuse
- 3: Komponente
- 4a, 4b: Akkuzellen
- 5a, 5b: Elektrodenbereiche
- 6: Verbindungsblech
- 6a, 6b, 6c: Teilbereiche
- 7a, 7b: Schlitze
- 8a, 8b: Schweißpunkte
- 9a, 9b: Schweißpunkte
- 10, 10': Kühlkörper
- 11, 11': Klebstoff
- 12: Wärmeableitelement
- 13a, 13b: Zungenelemente
- 14a, 14b, 14c, 14d: Schweißpunkte
- 15a, 15b, 15c, 15d: Schlitze
- 16a, 16b: Schlitze
- 17a, 17b: Schlitze
- 18a, 18b: Schweißpunkte
- 19a, 19b: Schweißpunkte
- 20: Abrundungen
- 21a, 21b: Schweißpunkte
- 22a, 22b: Schweißpunkte
- 23: Schlitz
- 23a, 23b, 23c, 23d: Schlitze
- 24a, 24b, 24c, 24d: Schweißpunkte
- 25a, 25b, 25c, 25d: Abrundungen
- 26: Zentrum der Schlitzanordnung
- 27: Zentrum der Schlitzanordnung
- 28a, 28b, 28c: Schlitze
- 28d, 28e, 28f: Schlitze
- 29a, 29b, 29c, 29d: Schweißbereiche
- 30a, 30b, 30c, 305d: Abrundungen
- 31: Schlitzanordnung
- 31a, 31b, 31c, 31d: Schlitzanordnungen
- 32: Aussparung

## Patentansprüche

1. Akkupack (1) für ein Elektrogerät, wobei
- das Akkupack (1) wenigstens zwei Akkuzellen (4a, 4b) enthält, die jeweils eine Zellhülle aufweisen;
- das Akkupack (1) ein Verbindungsblech (6) aufweist, welches einen ersten Elektrodenbereich (5a, 5b) an der Zellhülle einer ersten Akkuzelle (4a, 4b) der wenigstens zwei Akkuzellen (4a, 4b) mit einem zweiten Elektrodenbereich (5a, 5b) an der Zellhülle einer zweiten Akkuzelle (4a, 4b) der wenigstens zwei Akkuzellen (4a, 4b) elektrisch miteinander verbindet; und
- das Verbindungsblech (6) mit der Zellhülle der ersten Akkuzelle (4a, 4b) an wenigstens zwei Schweißbereichen (8a, 8b, 9a, 9b, 14a-14d, 18a, 18b, 19a, 19b, 21a, 21b, 22a, 22b, 24a-24d, 29a-29d) verschweißt ist;
- das Verbindungsblech (6) eine Schlitzanordnung (31) aufweist, wobei für jedes Paar von Schweißbereichen (8a, 8b, 9a, 9b, 14a-14d, 18a, 18b, 19a, 19b, 21a, 21b, 22a, 22b, 24a-24d, 29a-29d) der wenigstens zwei Schweißbereiche (8a, 8b, 9a, 9b, 14a-14d, 18a, 18b, 19a, 19b, 21a, 21b, 22a, 22b, 24a-24d, 29a-29d) die Schweißbereiche (8a, 8b, 9a, 9b, 14a-14d, 18a, 18b, 19a, 19b, 21a, 21b, 22a, 22b, 24a-24d, 29a-29d) des jeweiligen Paars auf gegenüberliegenden Seiten zumindest eines Schlitzes (7a, 7b, 15a-15d, 16a, 16b, 17a, 17b, 23, 23a-23d, 28a-28f) der Schlitzanordnung (31) liegen.

2. Akkupack (1) nach Anspruch 1, wobei die Schlitzanordnung (31) eine Vielzahl von Schlitzen (7a, 7b, 15a-15d, 16a, 16b, 17a, 17b, 23, 23a-23d, 28a-28f) aufweist, die sich ausgehend von einem Zentrum (26, 27) der Schlitzanordnung (31)jeweils radial nach außen erstrecken.

3. Akkupack (1) nach Anspruch 2, wobei
- die Vielzahl von Schlitzen (7a, 7b, 15a-15d, 16a, 16b, 17a, 17b, 23, 23a-23d, 28a-28f) rotationssymetrisch mit dem Zentrum (26, 27) der Schlitzanordnung (31) als Symmetriezentrum geformt und angeordnet ist; und/oder
- jeder der wenigstens zwei Schweißbereiche (8a, 8b, 9a, 9b, 14a-14d, 18a, 18b, 19a, 19b, 21a, 21b, 22a, 22b, 24a-24d, 29a-29d) zwischen zwei benachbarten der Vielzahl von Schlitzen (7a, 7b, 15a-15d, 16a, 16b, 17a, 17b, 23, 23a-23d, 28a-28f) angeordnet ist; und/oder
- die Schlitze (7a, 7b, 15a-15d, 16a, 16b, 17a, 17b, 23, 23a-23d, 28a-28f) der Vielzahl von Schlitzen (7a, 7b, 15a-15d, 16a, 16b, 17a, 17b, 23, 23a-23d, 28a-28f) jeweils gekrümmt geformt sind.

4. Akkupack (1) nach Anspruch 2 oder 3, wobei
- die Schlitze (7a, 7b, 15a-15d, 16a, 16b, 17a, 17b, 23, 23a-23d, 28a-28f) der Vielzahl von Schlitzen (7a, 7b, 15a-15d, 16a, 16b, 17a, 17b, 23, 23a-23d, 28a-28f) jeweils gekrümmt geformt sind; und
- die wenigstens zwei Schweißbereiche (8a, 8b, 9a, 9b, 14a-14d, 18a, 18b, 19a, 19b, 21a, 21b, 22a, 22b, 24a-24d, 29a-29d) einen ersten Schweißbereich (8a, 8b, 9a, 9b, 14a-14d, 18a, 18b, 19a, 19b, 21a, 21b, 22a, 22b, 24a-24d, 29a-29d) und einen zweiten Schweißbereich (8a, 8b, 9a, 9b, 14a-14d, 18a, 18b, 19a, 19b, 21a, 21b, 22a, 22b, 24a-24d, 29a-29d) aufweisen, wobei eine Gerade durch den ersten Schweißbereich (8a, 8b, 9a, 9b, 14a-14d, 18a, 18b, 19a, 19b, 21a, 21b, 22a, 22b, 24a-24d, 29a-29d) und den zweiten Schweißbereich (8a, 8b, 9a, 9b, 14a-14d, 18a, 18b, 19a, 19b, 21a, 21b, 22a, 22b, 24a-24d, 29a-29d) und durch das Zentrum (26, 27) der Schlitzanordnung (31) verläuft.

5. Akkupack (1) nach Anspruch 4, wobei
- jeder der wenigstens zwei Schweißbereiche (8a, 8b, 9a, 9b, 14a-14d, 18a, 18b, 19a, 19b, 21a, 21b, 22a, 22b, 24a-24d, 29a-29d) zwischen zwei benachbarten der Vielzahl von Schlitzen (7a, 7b, 15a-15d, 16a, 16b, 17a, 17b, 23, 23a-23d, 28a-28f) angeordnet ist; und
- die Gerade einen der Schlitze (7a, 7b, 15a-15d, 16a, 16b, 17a, 17b, 23, 23a-23d, 28a-28f), zwischen denen der erste Schweißbereich (8a, 8b, 9a, 9b, 14a-14d, 18a, 18b, 19a, 19b, 21a, 21b, 22a, 22b, 24a-24d, 29a-29d) angeordnet ist, sowie einen der Schlitze (7a, 7b, 15a-15d, 16a, 16b, 17a, 17b, 23, 23a-23d, 28a-28f), zwischen denen der zweite Schweißbereich (8a, 8b, 9a, 9b, 14a-14d, 18a, 18b, 19a, 19b, 21a, 21b, 22a, 22b, 24a-24d, 29a-29d) angeordnet ist, schneidet.

6. Akkupack (1) nach einem der vorhergehenden Ansprüche, wobei das Akkupack (1) ein Wärmeableitelement (12) aufweist, das in thermischem Kontakt mit dem Verbindungsblech (6) steht und das nicht direkt mit den wenigstens zwei Akkuzellen (4a, 4b) verbunden ist.

7. Akkupack (1) nach Anspruch 6, wobei
- das Wärmeableitelement (12) ein Wärmeableitblech aufweist, dessen Dicke größer ist als eine Dicke des Verbindungsblechs (6); und/oder
- die Dicke des Verbindungsblechs (6) im Bereich [0,3 mm, 1,0 mm] liegt; und/oder
- das Wärmeableitelement (12) eine höhere Wärmeleitfähigkeit als das Verbindungsblech (6) aufweist.

8. Akkupack (1) nach einem der Ansprüche 6 oder 7, wobei das Wärmeableitelement (12) das Verbindungsblech (6) teilweise überdeckt und eine Aussparung (31) aufweist, durch welche die wenigstens zwei Schweißbereiche (8a, 8b, 9a, 9b, 14a-14d, 18a, 18b, 19a, 19b, 21a, 21b, 22a, 22b, 24a-24d, 29a-29d) zugänglich sind.

9. Akkupack (1) nach einem der Ansprüche 6 bis 8, wobei das Wärmeableitelement (12) das Verbindungsblech (6) thermisch mit einer Innenwand eines Außengehäuses (2) des Akkupacks (1), innerhalb dessen die wenigstens zwei Akkuzellen (4a, 4b) angeordnet sind, steht.

10. Akkupack (1) nach einem der vorhergehenden Ansprüche, wobei
- die wenigstens zwei Schweißbereiche (8a, 8b, 9a, 9b, 14a-14d, 18a, 18b, 19a, 19b, 21a, 21b, 22a, 22b, 24a-24d, 29a-29d) von einem Mittelpunkt einer Stirnseite der Zellhülle der ersten Akkuzelle (4a, 4b) jeweils mindestens einen Abstand von 1 mm haben und/oder
- die Stirnseite der der Zellhülle der ersten Akkuzelle (4a, 4b) einen Rand in Form eines Kreises aufweist und die wenigstens zwei Schweißbereiche (8a, 8b, 9a, 9b, 14a-14d, 18a, 18b, 19a, 19b, 21a, 21b, 22a, 22b, 24a-24d, 29a-29d) von dem Mittelpunkt des Kreises jeweils mindestens einen Abstand haben, der mindestens 10% eines Durchmessers des Kreises beträgt.

11. Akkupack (1) nach einem der vorhergehenden Ansprüche, wobei zumindest ein Teil der wenigstens zwei Schweißbereiche (8a, 8b, 9a, 9b, 14a-14d, 18a, 18b, 19a, 19b, 21a, 21b, 22a, 22b, 24a-24d, 29a-29d) eine eindimensionale oder zweidimensionale Ausdehnung aufweist.

12. System aufweisend ein Akkupack (1) nach einem der vorhergehenden Ansprüche sowie ein Elektrogerät, das mittels des Akkupacks (1) mit elektrischer Energie versorgbar ist.

13. Verfahren zur elektrischen Verbindung von Akkuzellen (4a, 4b) eines Akkupacks (1) für ein Elektrogerät, wobei
- wenigstens zwei Akkuzellen (4a, 4b), die jeweils eine Zellhülle aufweisen, bereitgestellt werden;
- ein Verbindungsblech (6) zur elektrischen Verbindung eines ersten Elektrodenbereichs (5a, 5b) an der Zellhülle einer ersten Akkuzelle (4a, 4b) der wenigstens zwei Akkuzellen (4a, 4b) mit einem zweiten Elektrodenbereich (5a, 5b) an der Zellhülle einer zweiten Akkuzelle (4a, 4b) der wenigstens zwei Akkuzellen (4a, 4b) mit der Zellhülle der ersten Akkuzelle (4a, 4b) an wenigstens zwei Schweißbereichen (8a, 8b, 9a, 9b, 14a-14d, 18a, 18b, 19a, 19b, 21a, 21b, 22a, 22b, 24a-24d, 29a-29d) verschweißt wird; und
- die wenigstens zwei Schweißbereiche (8a, 8b, 9a, 9b, 14a-14d, 18a, 18b, 19a, 19b, 21a, 21b, 22a, 22b, 24a-24d, 29a-29d) derart positioniert werden, dass für jedes Paar von Schweißbereichen (8a, 8b, 9a, 9b, 14a-14d, 18a, 18b, 19a, 19b, 21a, 21b, 22a, 22b, 24a-24d, 29a-29d) der wenigstens zwei Schweißbereiche (8a, 8b, 9a, 9b, 14a-14d, 18a, 18b, 19a, 19b, 21a, 21b, 22a, 22b, 24a-24d, 29a-29d) die Schweißbereiche (8a, 8b, 9a, 9b, 14a-14d, 18a, 18b, 19a, 19b, 21a, 21b, 22a, 22b, 24a-24d, 29a-29d) des jeweiligen Paars auf gegenüberliegenden Seiten zumindest eines Schlitzes (7a, 7b, 15a-15d, 16a, 16b, 17a, 17b, 23, 23a-23d, 28a-28f) einer Schlitzanordnung (31) des Verbindungsblechs (6) liegen.

14. Verfahren nach Anspruch 13, wobei das Verbindungsblech (6) durch Punktschweißen oder Laserschweißen oder Reibschweißen mit der Zellhülle der ersten Akkuzelle (4a, 4b) verschweißt wird.

15. Verfahren nach einem der Ansprüche 13 oder 14, wobei
- ein Wärmeableitelement (12) mit dem Verbindungsblech (6) thermisch leitfähig verbunden wird, bevor das Verbindungsblech (6) mit der Zellhülle der ersten Akkuzelle (4a, 4b) verschweißt wird, sodass das Wärmeableitelement (12) das Verbindungsblech (6) teilweise überdeckt;
- das Verbindungsblech (6) im Bereich einer Aussparung (32) des Wärmeableitelements (12) mit der Zellhülle der ersten Akkuzelle (4a, 4b) verschweißt wird.
